# EUROPÄISCHE PATENTSCHRIFT

(11) **EP 0 563 819 B1**
(45) Veröffentlichungstag und Bekanntmachung des Hinweises auf die Patenterteilung: **09.09.1998**
(21) Anmeldenummer: 93105017.3
(22) Anmeldetag: 26.03.1993
(51) Int. Cl.: C08F 265/06, C14C 11/00

(54) **Verfahren zur Behandlung von Leder**
Process for the treatment of leather
Procédé de traitement du cuir

(30) Priorität: 03.04.1992 DE 4211060
(43) Veröffentlichungstag der Anmeldung: 06.10.1993
(73) Patentinhaber: Röhm GmbH, 64293 Darmstadt (DE)
(72) Erfinder: Christner, Jürgen, Dr., W-6104 Seeheim-Jugenheim (DE); Bauer, Harald, Dr., W-6108 Weiterstadt (DE); Weber, Maria Luise, W-6074 Rödermark (DE); N'Gueyilbé, Victor, W-7528 Karlsdorf (DE)

(56) Entgegenhaltungen:
- EP-A- 0 387 664
- EP-A- 0 492 405
- GB-A- 2 202 229

## Beschreibung

### Gebiet der Erfindung

Die Erfindung betrifft ein Verfahren zur Behandlung von Leder mit Produkten aus Pfropfpolymerisaten PF auf (Meth)acrylatbasis.

### Stand der Technik

In der Zurichtung von Leder spielen Polymerdispersionen auf Acrylatbasis eine bedeutende Rolle. Polymerprodukte auf Polyacrylatbasis werden sowohl zur Imprägnierung und Grundierung als auch in letzter Zeit vermehrt zur Schlußlackierung von Ledern eingesetzt (vgl. J.A. Handscomb, J.Soc. Leather Trades Chem. 43, 237 (1959); Ch. Cluthe et al. J. Am. Leather Chem. Assoc. 1978, 73(1) 22 - 29; Aus EP-A 0 387 664 sind wäßrige Kunststoffdispersionen bekannt, die eine gute Dehnbarkeit besitzen und so mit Vorteil auf flexiblen Untergründen, wie z. B. auf Leder aufgetragen werden können. Es sind Emulsionenpolymerisate mit schalenförmigen Aufbau, wobei der Kern vernetzt ist und eine Glastemperatur unter 0 °C hat, während die Schale relativ hart ist, wobei die Glastemperatur < 60 °C liegt. US-A 4 491 645). Von Bedeutung sind in der Lederzurichtung ferner Polyurethan-Dispersionen, Acrylat-Butadien-Dispersionen, PVC/PVAC-Dispersionen, und Nitrocelluloseemulsionen Obwohl der Anteil der angewendeten Acrylatdispersionen in der Lederzuichtung ein hohes Niveau erreicht hat, so ergibt sich an verschiedenen Punkten doch nur eine beschränkte Anwendbarkeit. Die Gründe dafür sind wohl zunächst bei gewissen materialimmanenten Eigenschaften zu suchen, die sich hier negativ auswirken, z.B. eine hohe Thermoplastizität, die sich in schlechter Prägbarkeit der Leder bemerkbar macht. Für viele Anwendungen, z.B. bei der Grundierung hat sich eine oft zu starke Klebrigkeit der Acrylatfilme als nachteilig erwiesen. Für hohe Ansprüche sind die mechanischen Eigenschaften der Filme aus Acrylatdispersionen, wie z.B. die Reißdehnung und die Zugfestigkeit, zu gering, ein Umstand der sich in unzureichender Knickfestigkeit (z.B. im BALLY-Flexometertest) auswirkt. Problematisch ist auch die Wasser- und Lösemittelbeständigkeit, die z.B. bei Polyurethan-Dispersionen deutlich stärker ausgeprägt ist.

### Aufgabe und Lösung

Es bestand demnach ein Bedarf an einem Verfahren zur Behandlung, insbesondere zur Zurichtung, von Ledern mit Produkten auf Poly(meth)acrylatbasis, die unter Beibehaltung des an sich günstigen Eigenschaftsspektrums von (Meth)acrylatpolymeren bei der Anwendung auf dem Ledergebiet beobachtete Nachteile vermeiden sollten.
Es wurde nun ein Verfahren gefunden, in dem überraschenderweise Pfropfpolymerisate PF auf (Meth)acrylatbasis auf die Lederoberfläche gleichmäßig aufgebracht werden, bei denen ein Pfropfmonomer PM der Formel (I) 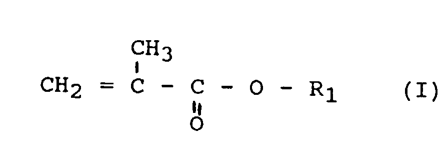 worin R₁ für einen Kohlenwasserstoffrest, insbesondere einen Alkylrest, mit 2 - 24 Kohlenstoffatomen, vorzugsweise 2 - 8 Kohlenstoffatomen, speziell für C₂-C₄-Alkyl und insbesondere für die Gruppen Ethyl, Butyl, Isobutyl steht, auf ein Basis-Polymer BP zu 55-100 Gew.-%, insbesondere zu 85 - 100 Gew.-% aufgebaut aus Monomeren der Formel (II) 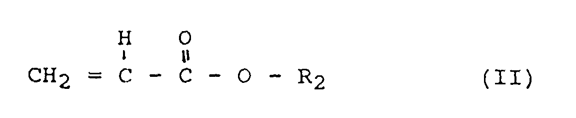 worin R₂ für einen Kohlenwasserstoffrest mit 2 - 24 Kohlenstoffatomen, vorzugsweise 2 - 8 Kohlenstoffatomen, insbesondere einen Alkylrest und insbesondere für die Gruppen Ethyl, Butyl und 2-Ethylhexyl steht, gepfropft ist, mit der Maßgabe, daß die Gruppen R₁ und R₂ Van-der-Waals-Volumina aufweisen, die sich um weniger als 30 % unterscheiden, und daß das fertig beschichtete Leder einem Temperprozeß zwischen 60-120°C unterzogen wird, um die Anforderungen der Technik besonders gut zu erfüllen.

Die erfindungsgemäß anzuwendenden Pfropfpolymerisate PF sind Gegenstand der deutschen Patentanmeldung P 40 41 525.2. (nachveröffentlichten Patentanmeldung EP-A- 0 492 401 gemäß Art. 54(3)/(4) EPÜ).

Im Einklang mit der dort angegebenen Lehre gilt vorteilhafterweise die Bedingung, daß die Mischungswärmen der hydrierten Monomerbausteine der Formel (I-hydr). 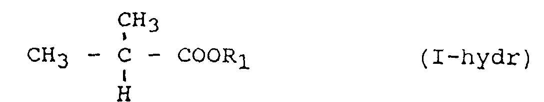 und der hydrierten Monomerbausteine der Formel (II-hydr).

CH₂ - CH₂ - COOR₂ (II-hydr)

worin R₁ und R₂ die oben angegebenen Bedeutungen besitzen, jeweils 418,68 Joule/Mol (< 100 cal/Mol) Mischung betragen.
Vorzugsweise betragen die Abweichungen der Van-der-Waals-Volumina nach Bondi [A. Bondi, J. Phys. Chem. 68, 441 (1964)] weniger als 20 %.

Die Bestimmung der Mischungswärme der hydrierten Monomerbausteine ist im allgemeinen nicht zwingend notwendig, zudem sie sich ohnehin in einer Reihe von Fällen unmittelbar einschlägigen Tabellenwerten entnehmen läßt. Verwiesen sei auf die Monographie "Mischungswärmen von Flüssigkeiten" von W.P. Belousow und A.G. Moratschewski, Verlag Chemie, Leningrad 1970. Definitionsgemäß stehen R₁ und R₂ in den Formeln (I) bzw. (II) sowie (I-hydr) bzw. (II-hydr) für einen Kohlenwasserstoffrest mit mindestens 2 bis 24 Kohlenstoffatomen, vorzugsweise für einen nichtcyclischen, gegebenenfalls verzweigten Alkylrest, insbesondere mit mindestens 2 und bis zu 8 Kohlenstoffatomen oder einen cyclischen Kohlenwasserstoffrest mit 5 bis 12 Ringgliedern, insbesondere einen alicyclischen Rest.

Eine Reihe von geeigneten I/II-Kombinationen kann der DE-OS 37 08 427 entnommen werden. Dort sind Polymermischungen aus Polyacrylaten und Polymethacrylaten beschrieben. Es ist also vorteilhaft, Pfropfmonomere PM aus der Reihe der in DE-OS 37 08 427 genannten Polymethacrylate auf die mit diesen Polymethacrylaten verträglichen Polyacrylate zu pfropfen.

Weiter sei angegeben, daß die am Aufbau des Basispolymerisats BP beteiligten Monomeren zu den Pfropfmonomeren PM üblicherweise im Gewichtsverhältnis 10 zu 90 bis 90 zu 10, vorzugsweise 90 zu 50 bis 50 zu 10, besonders bevorzugt im Verhältnis 60 zu 40 bis 80 zu 20 stehen.
Außer den Monomeren der Formel (I) können weitere zweckmäßig ausgewählte Monomere PM cogepfropft werden, beispielsweise andere Methacrylsäureester, besonders bevorzugt Methylmethacrylat, das in Anteilen von 0 - 80 Gew.-%, bevorzugt in Anteilen von 10 - 60, ganz besonders bevorzugt in Anteilen von 15 bis 40 Gew.-% an den Pfropfmonomeren PM enthalten sein kann. Ebenfalls ist es möglich, Acrylsäureester, z.B. Methylacrylat oder Ethylacrylat in Anteilen von 0,1 - 10 Gew.-%, bevorzugt 0,2 - 5 Gew.-% mitzuverwenden.
Der Anteil an funktionellen Comonomeren wie z.B. Methylolmethacrylamid, Methacrylsäure, Methacrylamid sollte < 5 Gew.-% betragen, bevorzugt enthält die Mischung PM kein Glycidylmethacrylat und kein Maleinsäureanhydrid. Ebenso sollte der Anteil an Styrol, Acrylnitril, Halogen enthaltenden Monomeren an der Mischung PM < 10 Gew.-%, bevorzugt < 1 Gew.-% und ganz besonders bevorzugt 0 Gew.-% betragen. Im allgemeinen liegt das Molgewicht der Basispolymerisate BP (bestimmt durch Viscosimetrie oder Lichtstreuung) im Bereich 200 000 bis 1 000 000 000, vorzugsweise bis 10 000 000. Vorzugsweise sind die Basispolymeren auch nach der Pfropfung nicht vernetzt. Es kann aber durchaus eintreten, daß das ursprünglich hochpolymere, unvernetzte Basispolymere durch das Aufpfropfen der Monomermischung PM geringfügig vernetzt wird (Anteil an Vernetzungspunkten < 0,01 Gew.-%, bevorzugt < 0,001 Gew.-%). Ganz besonders bevorzugt sind hochpolymere, unvernetzte Basispolymerisate. Demgegenüber sind die Pfropfäste, d.h. die auf das Basispolymerisat BP aufgepfropften Pfropfpolymeren wesentlich kürzerkettig. Im allgemeinen beträgt der Molekulargehalt der Pfropfäste 1 000 - 1 000 000 g/Mol (Dalton), bevorzugt 2 000 - 500 000, besonders bevorzugt 5 000 - 200 000. Im allgemeinen werden 10 - 100 Gew.-% (insbesondere 20 - 95 Gew.-%) der Pfropfmonomeren PM auf die Pfropfunterlage gepfropft.

Das Basispolymerisat BP besteht bevorzugt zu 55 - 100 Gew.-%, besonders bevorzugt aus 85 - 100 Gew.-% und ganz besonders bevorzugt zu 91 - 100 Gew.-% aus den Monomeren der Formel II.
Als weitere Monomere kann das Basispolymere in Anteilen von < 45 Gew.-%, bevorzugt in Anteilen < 15 und ganz besonders bevorzugt in Anteilen < 9 Gew.-% und bis 0,1 Gew.-% andere mit Acrylsäureestern copolymerisierbare Monomere enthalten; hier sind insbesondere Methacrylsäureester zu nennen. Danach ist bevorzugt von Mischungen aus 2 verschiedenen Monomeren der Formel II auszugehen. Das Basispolymere kann in Anteilen von bis zu 25 Gew.-%, bevorzugt < 15 Gew.-% Styrol enthalten. Besonderes Interesse verdienen gegebenenfalls substituierte Phenyl(alkyl)acrylate, wie beispielsweise Benzylacrylat oder Phenylpropylacrylat, die in Anteilen von 0 - 30 Gew.-% enthalten sein können. Auch Methylacrylat kann in Anteilen bis zu 45 Gew.-% zum Aufbau des Basispolymeren BP copolymerisiert werden. Anteile von hydrophilen Monomeren wie beispielsweise Hydroxyalkylacrylat oder Methacrylsäure können in Anteilen von 0 - 5 Gew.-%, bevorzugt in Anteilen von 0 - 3, ganz besonders bevorzugt in Anteilen von 0,1 - 0,5 Gew.-% einpolymerisiert werden.

Gewöhnlich nicht copolymerisiert werden sollen Butadiene oder Isoprene, deren Gehalt am Basispolymeren < 5 Gew.-% betragen soll, besonders bevorzugt sind solche Basispolymeren, die weder Butadien noch Isopren enthalten. Ebenfalls in der Regel nicht verwendet werden sollen zum Aufbau des Polymeren BP mehrfunktionelle Methacrylsäureester wie Butandioldimethacrylat oder mehrfunktionelle Acrylsäureester wie Hexandioldiacrylat. Deren Gehalt ist auf < 0,01 Gew.-% am Basispolymeren BP zu beschränken. Pfropfaktive Monomere wie Allyl(meth)acrylate oder Vinyl(meth)acrylate, z.B. Allylacrylat können dagegen in Anteilen bis zu 1 Gew.-% (bevorzugt in Anteilen bis zu 0,3, besonders bevorzugt bis zu 0,2, ganz besonders bevorzugt bis zu 0,09 Gew.-%) enthalten sein.
Besonders bei hohen Anteilen an pfropfaktiven Monomeren müssen Polymerisationsregler wie Mercaptane z.B. 2-Ethylhexylthioglykolat mitverwendet werden (in Anteilen < 0,5 Gew.-%), um ein Vernetzen der Acrylatpolymeren zu vermeiden. Als besonders geeignet haben sich auf dem Ledergebiet, insbesondere für die Lederzurichtung Produkte PF erwiesen, bei denen die Kohlenwasserstoffreste R₁ und R₂ C₂-C₄-Alkyl bedeuten.

Als paradigmatisch für die vorliegende Erfindung seien im folgenden Basispolymerisate BP, in denen R₂ in Formel I für Ethyl steht (Polyethylacrylat) und Pfropfmonomere PM der Formel (I) in denen R₁ für Ethyl steht (Ethylmethacrylat), angeführt.
Man erhält in diesem Falle beispielsweise durch einfache Zulaufpolymerisation Polyethylacrylat-Polyethylmethacrylat-Pfropfpolymere, die bei Raumtemperatur glasklare, zähe Kunststoff-Filme bilden. Ebenso werden gute Ergebnisse erhalten, wenn R₁ = n-Butyl und R₂ = Isobutyl ist.

### Herstellung der Polymerisate PF

Im Prinzip eignen sich die einschlägig verwendeten Polymerisationsverfahren des Standes der Technik (vgl. H. Rauch-Puntigam, TH. Völker, Acryl- und Methacrylverbindungen, Springer Verlag 1967; H.F. Mark et al. Encyclopedia of Polymer Science & Engineering, 2nd Ed. Vol. 1, 265-276, J. Wiley, 1985) zur Herstellung der Polymeren, wobei bei der Herstellung der Basispolymerisate BP vorteilhaft Bedingungen angewendet werden, welche die Vernetzung nicht begünstigen. In der Regel bedient man sich der radikalischen Polymerisation unter Verwendung der üblichen Radikalinitiatoren.
In aller Regel wird man zunächst das Basispolymere BP herstellen und dieses in Lösungsmitteln, die eine geringe Übertragungsneigung aufweisen, z.B. Butylacetat, bei möglichst hoher Temperatur z.B. 120 Grad C mit den Pfropfmonomeren PM pfropfen. Besonderes Interesse verdient die Pfropfung der hochmolekularen Basispolymeren direkt in der Schmelze ohne Lösungsmittel im Extruder oder einen Druckreaktor bei Temperaturen von 150 bis 200 Grad C. Dabei wird bevorzugt das BP zunächst in Lösungsmittel hergestellt oder in Substanz nur bis zu einem geringen Umsatz polymerisiert, entgast und anschließend mit den Monomeren PM gepfropft. Zur Erreichung gut handhabbarer BP ist dessen MW gegebenenfalls unter Zugabe von Reglern auf Molekulargewichte < 1 000 000 zu begrenzen. Dabei ist vor allem die Herstellung im Emulsionspolymerisationsverfahren in wäßrigem Milieu technisch bedeutsam. Als Initiatoren kommen die dafür üblichen, insbesondere Persulfate wie z.B. Kalium- oder Ammoniumperoxidisulfat in Mengen von gewöhnlich 0,001 bis 0,5 Gew.-% bezogen auf die Monomeren infrage, gegebenenfalls auch ein Redoxsystem (vgl. Rauch-Puntigam loc.cit. S. 221 - 229). Während die Anwendung gut pfropfbarer Monomeren im Basispolymerisat BP Vorteile bringt, hat es sich als ungünstig erwiesen, die Pfropfung durch einen hohen Initiatorzusatz zu forcieren. Diese Maßnahme führt zu thermolabilen Polymeren.
Als Emulgatoren dienen ebenfalls die an sich bekannten, insbesondere anionogene wie die Alkalisalze von Paraffinsulfonaten, normalerweise in Mengen von 0,5 - 5 Gew.-% (bezogen auf die Wassermenge).

Von besonderem Interesse ist die Herstellung der Pfropfpolymeren in einem zweistufigen Emulsionspolymerisationsverfahren, wobei die erste Stufe, die Herstellung der Basispolymerisate BP, vorteilhaft als Batchpolymerisation durchgeführt wird. Auf diesem Wege gelingt es in besonders einfacher Weise z.B. nichtvernetzte Polyacrylate mit einem erwünscht hohen Molekulargewicht (beispielsweise J = 200 - 1 000 ml/g; bestimmt nach ISO 1628-6) zu gewinnen.

Zweckmäßig schließt sich unmittelbar daran die Pfropfung vorzugsweise in Form einer Zulaufpolymerisation der Pfropfmonomeren PM an. Vorteilhaft wird dieser Schritt bei Temperaturen um 70 - 100 Grad C durchgeführt.
Dabei kann im einzelnen wie folgt verfahren werden:
Zunächst stellt man a) unter Zugabe der Emulgatoren und der Initiatoren eine wäßrige Emulsion der Monomeren her, wobei als Anhalt ein Gewichtsverhältnis Monomer zu Wasser wie ca. 1 : 2 gelten kann.
Vorteilhaft kann dabei so vorgegangen werden, daß zunächst nur der peroxidische Partner des Redox-Initiatorsystems zugesetzt wird. Anschließend erwärmt man zweckmäßig unter einem inerten Schutzgas wie beispielsweise Stickstoff/ Argon auf eine geeignete Temperatur, beispielsweise 35 ± 10 Grad C und unter Zugabe des reduzierenden Partners des Redoxsystems. Gewöhnlich steigt die Temperatur binnen kurzer Zeit, als Anhalt seien ca. 10 Minuten genannt, stark an, beispielsweise auf ca. 85 ± 5 Grad C. Daraufhin werden die Pfropfmonomeren PM vorzugsweise durch Eintropfen zugegeben, in der Regel innerhalb ca. 15 - 90 Minuten. Anschließend wird unter Erwärmen, beispielsweise indem man die Temperatur bei ca. 80 Grad C hält, die Endpolymerisation durchgeführt.
Man erhält gewöhnlich das Pfropfpolymerisat PF in Form einer stabilen wäßrigen Dispersion, mit einem Polymergehalt üblicherweise im Bereich von 20 bis 70 Gew.-% bezogen auf die gesamte Dispersion, die direkt oder nach Zugabe von z.B. Ammoniak zu einem zähen, elastischen Film aufgetrocknet werden kann. Der Restmonomerengehalt liegt gewöhnlich im ppm-Bereich.

Durch Variation der Monomeren im Basispolymer BP und der Pfropfmonomeren PM läßt sich die Härte bzw. die Konsistenz der Filme in vielfältiger Weise beeinflussen und steuern. (Zum Einfluß der Monomeren auf die "Härte" der Polymeren vgl. Vieweg-Esser, Kunststoffhandbuch Bd. IX, S. 333 - 340, Carl Hanser 1975; F.H. Mark et al. Encyclopedia of Science & Engineering, 2nd Ed., Vol. 7, pg. 533 - 544, J. Wiley 1987; Kirk Othmer, Encyclopedia of Chemical Technology 3rd. Ed. Vol. 1, pg. 387 - 289, J. Wiley, 1978).

Für den Grundierungsschritt bei den Ledern werden "**weiche**" Pfropfpolymerisate der Filmhärte Shore A20 bis A50 bevorzugt angewendet. (Zur Bestimmung der Shore-Härte vgl. DIN 53 505 bzw. ASTM D 676).
Die Filmhärte läßt sich in erster Näherung einmal durch Auswahl der Pfropfmonomeren zum anderen durch Mischen von "weichen" und "harten" Pfropfpolymerisaten einstellen.
Als Beispiele für "weiche" Pfropfpolymerisate seien solche mit Butylmethacrylat und/oder Ethylhexylmethacrylat als Pfropfkomponente genannt, die ggfls. mit "härteren" Monomeren wie Ethylmethacrylat, und Methylmethacrylat cogepfropft sein können. Als "härtere" Pfropfpolymerisate seien solche mit Ethylmethacrylat, Methylmethacrylat, Benzylmethacrylat ggfls. im Gemisch als Pfropfmonomere gewonnen genannt.

### Durchführung:

Die Applikationsverfahren und -modalitäten der erfindungsgemäßen Pfropfpolymerisate PF schließen sich eng an diejenigen des Standes der Technik an. (Vgl. H. Herfeld Ed. Bibliothek des Leders Bd. 6, R. Schubert, Lederzurichtung-Oberflächenbehandlung des Leders, Umschau 1982, S. 148 - 219) ebenso wie die anwendbaren Lederdeckfarben und Schonungshilfsmittel und die Zurichtshilfsmittel. Insbesondere empfiehlt sich der Auftrag durch Spritzen, durch "airless"-Spritzen, Rollercoating u.ä.
Die Grundierungs- und Appreturaufträge können z.B. zur Verbesserung der physikalischen Eigenscnaften, wie z.B. Knickfestigkeit, Wasser- und Lösungsmittelbeständigkeit, und Reißdehnung, bzw. der Prägbarkeit mit bestimmten Polyurethandispersionen zusätzlich, sowie mit an sich bekannten Vernetzungsmitteln auf Epoxid-, Polycarbodiimid-, Polyisocyanat- oder Polyaziridinbasis gemischt werden. Diese Vernetzungsmittel stehen im allgemeinen zu den Polymerprodukten PF im Gewichtsverhältnis 100 zu 10 bis 100 zu 0,1. Die Praxis hat gezeigt, daß der Anteil an nicht-gepfropften Polymerisatdispersionen nicht zu hoch sein darf, um die Ausbildung der Hart-Weich-Segment-Struktur nicht allzusehr zu stören.
So sollte in der Regel der Anteil an nicht-gepfropfter Polymerisat-Dispersion 90 % nicht überschreiten.

Zum Erreichen einer Mindestschichtdicke sowie einer ausreichenden Deckwirkung ist die Verwendung von an sich bekannten Verdickungsmitteln angezeigt. Als Verdicker kommen beispielsweise solche aus der Gruppe gebildet aus aus Polyglykolpolyurethane, Polyvinylpyrrolidon oder Acrylat(co)polymerisate in Frage. Im allgemeinen stehen die Verdicker zu den Pfropfpolymerisaten PF im
Gewichtsverhältnis 100 zu 10 bis 100 zu 0,01. Durch Einstellung und Anpassung der Viskosität läßt sich das Eindringvermögen bzw. der Grad der Deckung gut regulieren. Wie bereits ausgeführt, läßt sich die Filmhärte und die Filmkonsistenz durch geeignete Variation der Monomeren im Pfropf- und im Basispolymerisat sowie durch Gestaltung des Verhältnisses von Basis zu Pfropfpolymer weitgehend in der gewünschten Richtung steuern. Als ein weiterer Vorteil im Zusammenhang mit der Anwendung insbesondere in der Zurichtung von Ledern sei vermerkt, daß sich alle üblichen Hilfsmittel, speziell im Handel befindliche, zur Regulierung von Griff, Farbe, Verlauf und Viskosität einsetzen lassen. Dies sind im allgemeinen Lösungen (z.B. Velaufsmittel, Produkte auf Basis Glykolether, Ether, wie z.B. Butylglykol, Methoxypropanol, und Tributoxyethylphosphat ) bzw. Emulsionen/Dispersionen mit Kasein, Wachsen, Silikonen in den üblichen Anwendungsmengen bzw. Anwendungskonzentrationen (vgl. F. Stather, Gerbereichemie und Gerbereitechnologie, Akademie Verlag Berlin, 1967, S. 507 - 632). R. Schubert, Lederzurichtung-Oberflächenbehandlung des Leders loc.cit.

Insbesondere können die an sich bekannten Lederfarben sehr wirksam eingesetzt werden (vgl. F. Stather loc.cit, S. 615 - 632) beispielsweise in Form von Pigmentpasten, weiter können im Bedarfsfall einschlägig verwendete Mattierungsmittel, beispielsweise auf Silikat-Basis eingesetzt werden.

Als besonders herausragende Eigenschaften der erfindungsgemäßen Pfropfpolymeren sind deren relativ geringe Thermoplastizität und deren gute Zug-Dehnungseigenschaften zu nennen. Bei der Beschichtung von Leder schlägt sich dieser Befund in einer ausgezeichneten Prägbarkeit, geringer Klebneigung bzw. guter Blockfestigkeit sowie in einer hohen Flexibilität nieder.

Eine grundlegende Voraussetzung für das Erreichen dieser Eigenschaften ist die Temperung des beschichteten Materials bei bestimmten Minimaltemperaturen. Über die Zusammensetzung der Polymeren kann die Minimaltemperatur in den für die Lederzurichtung günstigen Bereich von 60 - 120 Grad C gelegt werden. Auch die Temperzeit spielt zum Erreichen der optimalen Eigenschaften eine Rolle.
Die günstige Beeinflussung der genannten Eigenschaften erreicht man vor allem während den bei der Zurichtung üblichen Behandlungszeiten, die auf die Schritte der Trocknung, des Bügelns und der Prägung entfallen.
Im Falle der Trocknung sind im Durchschnitt z.B. 2 bis 5 Minuten bei Temperaturen im Bereich 60 - 90 Grad C anzusetzen. Die statischen und dynamischen Vorgänge des Bügelns und des Prägens erfolgen bei Temperaturen zwischen 70 und 170 Grad C, in der Regel während einigen Sekunden, als Anhalt seien 2 - 6 sec. genannt und unter Drücken von 5-30 MPa (50 - 300 bar).
Allgemein kann gesagt werden, daß sich die physikalische Eigenschaften der Beschichtung durch Ausdehnen der Temperzeit zusätzlich steigern läßt.
Bei der praktischen Durchführung wird vorteilhaft so vorgegangen, daß die bei der Herstellung erhaltenen wäßrigen Polymer-Dispersionen zur Anwendung kommen können.

### Allgemeine Verfahrensweise:

Das Pfropfpolymerisat PF, vorzugsweise in Dispersionsform wird vorgelegt. Dazu gibt man unter Rühren das Wasser und anschließend die Zusatzstoffe, die an sich bekannten Hilfsmittel zur Regulierung der Ledereigenschaften, wie Mattierungsmittel, die Casein-Fettemulsion, sodann die wäßrige Paraffin-Emulsion und die Silikonemulsion, weiter die Pigmentpaste und das Koaleszenzmittel, und zuletzt gleichzeitig gegebenenfalls das Verdickungsmittel.
Nach dieser Verfahrensweise wurden zwei Formulierungen a) und b) (Zusammensetzung siehe Tabelle 1) hergestellt.

### BEISPIELE

### A-1: Grundierung für vollnarbige Nappaleder

### Applikation:

Die Formulierungen a) bzw. b) werden ein bis zweimal satt (20 - 40 g/m²) gespritzt mit einer handelsüblichen Luftdruck-Spritzpistole (ca. 0.4 MPa (4 bar) Druck, Düsenweite 1,2 bzw. 1,4 mm). Anschließend wird entweder bei 60 - 80 Grad C in einem Trockenkanal mit Umluft 1 - 5 Minuten oder bei Raumtemperatur getrocknet. Dann wird gebügelt bei 80 - 90 Grad C und einem Druck von 5-10 MPa (50 - 100 bar). Anschließend wird noch 2 mal mit der jeweiligen Formulierung mittelstark gespritzt (ca. 10 - 20 g/m²) und wie oben getrocknet.
Die Gesamtauftragsmenge beträgt 60 - 100 g/m² bzw. 80 - 120 g/m². Die Ergebnisse sind in Tabelle 2 wiedergegeben.

### A-2: Grundierung für geschliffene Möbelleder

### Applikation:

Die Formulierungen a) bzw. b) werden zweimal gut deckend eventuell "airless" gespritzt (75 - 125 g/m²). Trocknung erfolgt wie unter Applikation (1). Dann wird ein
Zwischenlack (Nitrocellulose-Emulsion) gespritzt, dann wird getrocknet [siehe (1)] anschließend wird geprägt bei einer Temperatur von 90 Grad C, einem Druck von 25 MPa (250 bar) für eine Dauer von 3 sec. Es wird eine Prägeplatte mit mittleren Porennarben verwendet. Es wird noch einmal mittelstark (25 - 50 g/m²) gespritzt, getrocknet und abschließend 8 Stunden gemittelt.
Die Gesamtauftragsmenge beträgt 200 - 300 g/m². Die Ergebnisse sind in Tab. 2 wiedergegeben.

### A-3: Grundierung für Spalte

### Applikation:

Die Formulierungen a) bzw. b) werden einmal mittels "Roller-coating" im Gegenlauf aufgetragen (100 - 175 g/m²). Es wir dann gebügelt bei 90 Grad C, 15 MPa (150 bar) für 3 sec., daran schließt sich zweimaliges Roller-coating mit 75 - 100 g/m² und anschließend mit 25 - 75 g/m² an. Dann wird als Zwischenlack eine Nitrocellulose-Emulsion aufgebracht. Dann wird geprägt bei 90 Grad C, 250 - 300 bar und 3 - 5 sec.
Die Gesamtauftragsmenge beträgt 200 - 350 g/m². Die Ergebnisse gehen aus Tab. 2 hervor.

### A-4:

### Applikation:

Grundierung: gemäß einer üblichen Grundierungsrezeptur. Die Formulierungen a) und b) werden zweimal gespritzt. Die Gesamtauftragsmenge beträgt 30 - 60 g/m².
Die Ergebnisse sind Tab. 2 zu entnehmen.

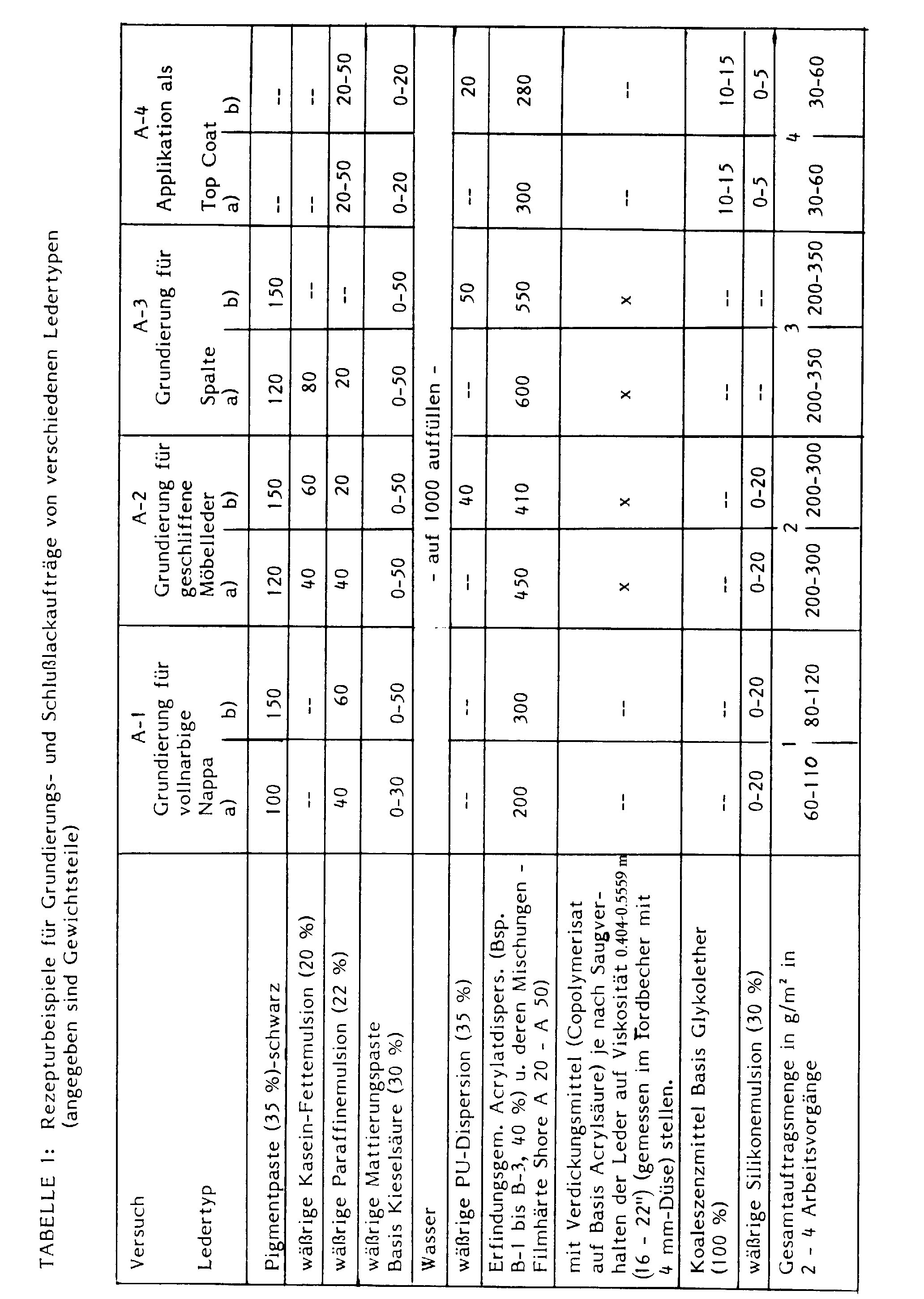

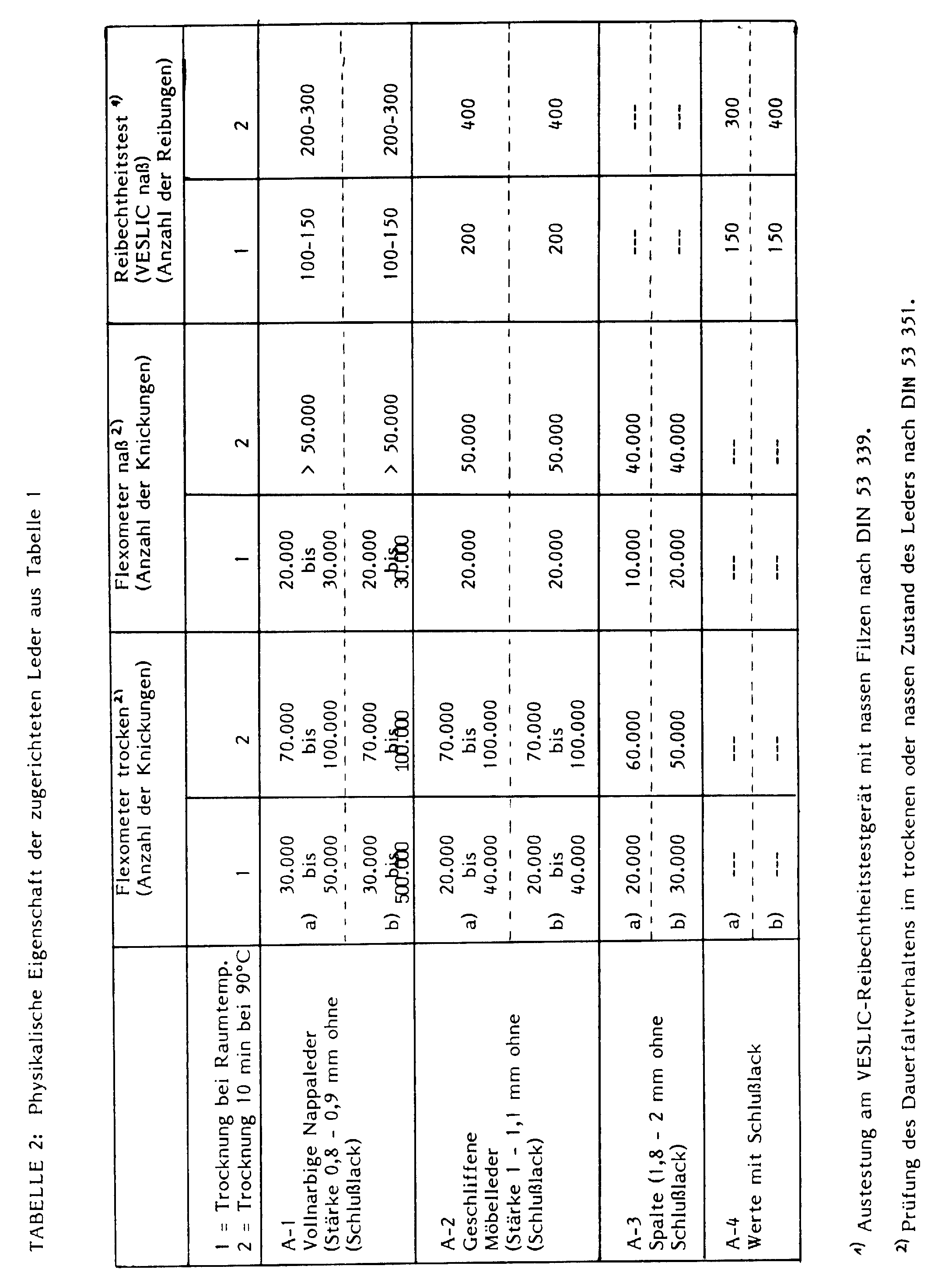

Die erfindungsgemäß anzuwendenden Pfropfpolymerisate PF können beispielsweise nach den folgenden Beispielen hergestellt werden. Für sämtliche Pfropfpolymerisate gilt, daß sich die Van-der-Waals-Volumina der Ester-Alkylreste um weniger als 30 % unterscheiden.

### B-(1):

Pfropfpolymer auf Basispolymer aus Ethylacrylat/Methacrylsäure gepfropft mit Ethylmethacrylat im Gew.-Verhältnis (69,65 : 0,35) : 30.

Eine Emulsion aus 300 g Ethylacrylat, 1,51 g Methacrylsäure, 3,1 g Natriumsalz des C15-Paraffinsulfonats als Emulgator, 0,62 g Ammoniumperoxidisulfat, 0,8 mg FeSO₄ und 566 g Wasser wird auf 30 Grad C erwärmt und unter Inertgas (Stickstoff oder Argon) mit 0,31 g Na₂S₂O₅ versetzt. Die Temperatur steigt innerhalb von 8 - 10 min auf 103 Grad C. Sofort anschließend werden 129 g Ethylmethacrylat innerhalb von 15 min zugetropft. Zur Endpolymerisation wird 60 min bei 90 Grad C gerührt, dann wird abgekühlt.
Man erhält eine stabile Dispersion, die unmittelbar oder nach Zugabe von NH₃ zu einem zähen, elastischen Film aufgetrocknet werden kann. Nach der Trocknung in einem Trockenschrank bei 90 Grad C wird ein transparenter Film enthalten. Zur weiteren Charakterisierung siehe Tabelle 3.

### B-(2):

Pfropfpolymer auf Basispolymer Ethylacrylat/Methacrylsäure gepfropft mit Ethylmethacrylat im Gew.-Verhältnis (72,75 : 2,25) : 25.

Analog Beispiel B-(1) wird eine Emulsion aus 304 g Ethylacrylat 9,39 g Methacrylsäure, 3,1 g Natriumsalz des C15-Paraffinsulfonats mit 0,63 g Ammoniumperoxidisulfat und 0,8 mg FeSO₄ sowie 0,31 g Na₂S₂O₅ in 587 g Wasser polymerisiert und darauf 104 g Ethylmethacrylat gepfropft.

### B-(3):

Pfropfpolymer auf Basispolymer Ethylacrylat/Butylacrylat/ Methacrylsäure gepfropft mit Ethylmethacrylat im Gew.-Verhältnis (65,25 : 7,5 : 2,25) : 25.

Analog Beispiel B-(1) wird eine Emulsion aus 273 g Ethylacrylat, 31,3 g Butylacrylat, 9,39 g Methacrylsäure, 3,1 g Natriumsalz des C15-Paraffinsulfonats mit 0,62 g Ammoniumperoxidisulfat und 0,78 mg FeSO₄ sowie 0,31 g Na₂S₂O₅ in 566 g Wasser polymerisiert. Darauf werden 104 g Ethylmethacrylat pfropfend polymerisiert.

Die Bestimmung der Zugfestigkeit der Filme wird nach DIN 53 455 bzw. ISO/R 527 der Reißdehnung nach DIN 53 455, der Shore-D-Härte nach DIN 53 505 vorgenommen.

**TABELLE 3**

| Beispiel | Zugfestigkeit [MPa] | Reißdehnung [%] | Shore-Härte |
|---|---|---|---|
| B-(1) | 8,31 | 970 | 81 |
| B-(2) | 6,8 | 900 | 60 |
| B-(3) | 5,6 | 750 | 55 |

### Beispiel B-(4) (mit Vernetzer)

Pfropfpolymer auf Basispolymer Ethylacrylat/Allylmethacrylat gepropft mit Ethylmethacrylat im Gewichtsverhältnis (69,85 : 0,15) : 30. Analog Beispiel B-(1) wird eine Emulsion aus 300 g Ethylacrylat, 0,63 g Allylmethacrylat, 3,1 g Natriumsalz des C15-Paraffinsulfonates mit 0,63 g Ammoniumperoxidisulfat und 0,8 mg FeSO₄ sowie 0,31 g Na₂S₂O₅ in 600 g Wasser polymerisiert und darauf 129 g Ethylmethacrylat gepfropft.

| Physikalische Eigenschaften: | |
|---|---|
| Zugfestigkeit | 10 MPa |
| Reißdehnung | 690 % |

### Beispiel B-(5) (Acrylate mit C8-Rest)

Pfropfpolymer auf Basispolymer 2-Ethylhexylacrylat/Methacrylsäure gepfropft mit 2-Ethylhexylmethacrylat im Gewichtsverhältnis (68 : 2) : 30.
Analog Beispiel B-(1) wird eine Emulsion aus 238 g 2-Ethylhexylacrylat, 7 g Methacrylsäure, 2,63 g Natriumsalz des C15-Paraffinsulfonates mit 0,53 g
Ammoniumperoxodisulfat und 0,8 mg FeSO₄, sowie 0,26 g Na₂S₂O₅ in 592 g Wasser polymerisiert und darauf 105 g 2-Ethylhexylmethacrylat gepfropft.

## Patentansprüche

1. Verfahren zur Behandlung von Leder,
dadurch gekennzeichnet,
daß man auf die Lederoberfläche Pfropfpolymere PF auf (Meth)acrylatbasis gleichmäßig aufbringt, wobei Pfropf-Monomere der Formel (I) 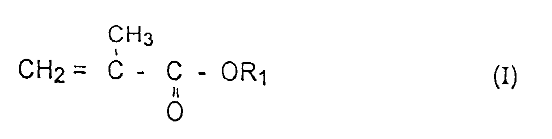 worin R₁ für einen Kohlenwasserstoffrest mit 2 - 24 Kohlenstoffatomen steht, auf ein Basispolymerisat BP, das zu 55 - 100 Gew.-% aus Monomeren der Formel (II) 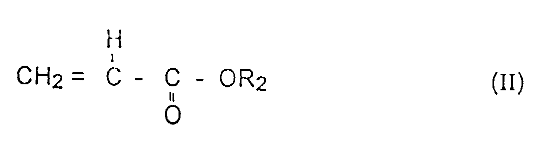 worin R₂ für einen Kohlenwasserstoffrest mit 2 bis 24 Kohlenstoffatomen gepfropft werden, mit der Maßgabe, daß die Gruppen R₁ und R₂ Van-der-Waals-Volumina aufweisen, die sich um weniger als 30 % unterscheiden
und das fertig beschichtete Leder einem Temperprozeß zwischen 60-120°C unterzieht.

2. Verfahren nach Anspruch 1, dadurch gekennzeichnet, daß R₁ in Formel (I) einen C₂-C₈-Alkylrest bedeutet.

3. Verfahren nach Anspruch 1, dadurch gekennzeichnet, daß R₂ in Formel (II) einen C₂-C₈-Alkylrest bedeutet.

4. Verfahren gemäß den Ansprüchen 1 - 3, dadurch gekennzeichnet, daß die am Aufbau des Polymeren BP betdiligten Monomeren zu den Pfropfmonomeren im Gewichtsverhältnis 10 : 90 bis 90 : 10 stehen.

5. Verfahren gemäß den Ansprüchen 1 - 4, dadurch gekennzeichnet, daß die Pfropfpolymeren in Form einer wäßrigen Dispersion mit einem Polymergehalt zwischen 20 und 70 Gew.-% bezogen auf die gesamte Dispersion vorliegen.

6. Verfahren nach Anspruch 5, dadurch gekennzeichnet, daß die Dispersionen noch gleichzeitig an sich bekannte Verdicker enthalten.

7. Verfahren gemäß den Patentansprüchen 5 bis 6, dadurch gekennzeichnet, daß die Dispersionen noch zusätzlich an sich bekannte Vernetzungsmittel enthalten.

8. Verfahren gemäß den Patentansprüchen 5 bis 7, dadurch gekennzeichnet, daß die Dispersionen noch zusätzlich an sich bekannte Hilfsmittel zur Regulierung der Ledereigenschaften enthalten.

9. Leder, ausgerüstet mit einer Deckschicht aus einem filmbildenden Pfropfprodukt PF gemäß den Patentansprüchen 1 bis 8.

## Claims

1. A process for treating leather, characterised in that graft polymer PF based on (meth)acrylate is evenly applied to the surface of the leather, wherein graft monomers of formula (I) 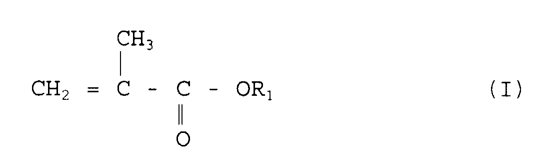 wherein R₁ represents a hydrocarbon group having 2 - 24 carbon atoms, are grafted onto a base polymer BP comprising 55 - 100 wt. % of monomers of formula (II) 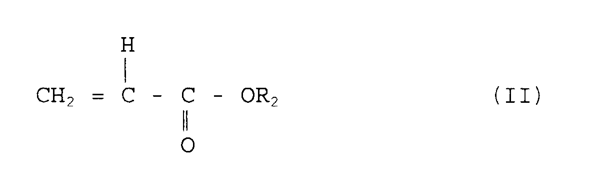 wherein R₂ represents a hydrocarbon group having 2 - 24 carbon atoms, with the proviso that the groups R₁ and R₂ have Van-der-Waals Volumes which differ by less than 30%, and the finished coated leather is subjected to a tempering process at between 60 and 120°C.

2. A process according to claim 1, characterised in that R₁ in formula (I) represents a C₂₋₈-alkyl group.

3. A process according to claim 1, characterised in that R₂ in formula (II) represents a C₂₋₈-alkyl group.

4. A process according to claims 1 to 3, characterised in that the monomers involved in the synthesis of the polymer BP are in a weight ratio to the graft monomers of 10 : 90 to 90 : 10.

5. A process according to claims 1 to 4, characterised in that the graft polymers are present in the form of an aqueous dispersion having a polymer content of between 20 and 70 wt. %, based on the whole dispersion.

6. A process according to claim 5, characterised in that the dispersions simultaneously contain thickeners known per se.

7. A process according to claims 5-6, characterised in that the dispersions additionally contain cross-linking agents known per se.

8. A process according to claims 5 to 7, characterised in that the dispersions additionally contain adjuvants known per se for regulating the qualities of the leather.

9. A leather, provided with a covering layer comprising a film-forming graft product PF according to claims 1 to 8.

## Revendications

1. Procédé de traitement du cuir,
caractérisé en ce qu'
on dépose régulièrement sur la surface du cuir des polymères greffés PG à base de (méth)acrylate, opération dans laquelle on greffe les monomères de greffage de formule (I) 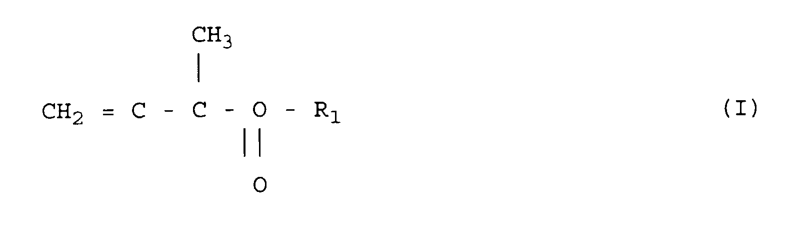 dans laquelle R₁ représente un radical hydrocarboné, en particulier un radical alkyle avec 2 à 24 atomes de carbone, sur un polymère de base PB qui est constitué à 100 % en poids de monomères de formule (II) 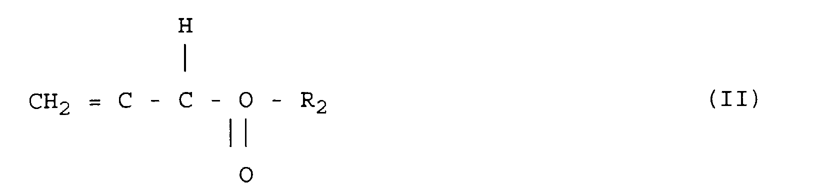 dans laquelle R₂ représente un radical hydrocarboné avec 2 à 24 atomes de carbone, sous réserve que les groupes R₁ et R₂ présentent des volumes de Van-der-Waals qui se différencient de moins de 30 %, et en ce qu'on soumet le cuir revêtu à un processus de maintien de la température entre 60 et 120°C.

2. Procédé selon la revendication 1,
caractérisé en ce que
R₁ dans la formule (I) représente un radical alkyle en C₂ à C₈.

3. Procédé selon la revendication 1,
caractérisé en ce que
R₂ dans la formule (II) représente un radical alkyle en C₂ à C₈.

4. Procédé selon les revendications 1-3,
caractérisé en ce que
les monomères participant à la constitution du polymère PB sont vis-à-vis des monomères de greffage dans un rapport pondéral de 10:90 à 90:10.

5. Procédé selon les revendications 1-4,
caractérisé en ce que
les polymères de greffage se présentent sous la forme d'une dispersion aqueuse ayant une teneur comprise entre 20 et 70 % en poids par rapport à l'ensemble de la dispersion.

6. Procédé selon la revendication 5,
caractérisé en ce que
les dispersions peuvent encore contenir simultanément des épaississants connus.

7. Procédé selon les revendications 5 à 6,
caractérisé en ce que
les dispersions peuvent encore contenir en outre des agents de réticulation connus.

8. Procédé selon revendications 5 à 7,
caractérisé en ce que
les dispersions contiennent encore en outre des adjuvants connus pour la régulation des propriétés du cuir.

9. Cuir muni d'une couche de revêtement faite d'un produit de greffage PG formant pellicule selon les revendications 1 à 8.
